# EUROPÄISCHE PATENTANMELDUNG

(11) **EP 3 279 398 A1**
(43) Veröffentlichungstag der Anmeldung: **07.02.2018**
(21) Anmeldenummer: 17401086.8
(22) Anmeldetag: 01.08.2017
(51) Int. Cl.: E01C 19/20, E01H 10/00, A01C 17/00

(54) **WINTERDIENSTSTREUMASCHINE UND VERFAHREN ZUM AUSBRINGEN VON STREUGUT AUF EINER FAHRBAHN**

(30) Priorität: 04.08.2016 DE 102016114420
(71) Anmelder: Amazonen-Werke H. Dreyer GmbH & Co. KG, 49205 Hasbergen (DE)
(72) Erfinder: Lampert, Tobias, 49545 Tecklenburg (DE)

(57) **Zusammenfassung**

Winterdienststreumaschine (1) zum Ausbringen von Streugut (22) auf einer Fahrbahn, mit einem Vorratsbehälter (2) für einen Streugutvorrat (21), einer Streuscheibe (3) zum Verteilen des Streuguts (22) in einem Streufächer (4) auf der Fahrbahn, einer Dosiervorrichtung (5) zum Dosieren des Streuguts (22) aus dem Vorrat auf die Streuscheibe (3), und mit einer Detektionseinrichtung (6) zur Streufächerüberwachung, dadurch gekennzeichnet, dass die Detektionseinrichtung (6) einen mit seinem Blickfeld (B) nach oben gerichteten Radarsensor (61) umfasst, der den Streufächer (4) im Betrieb von unten her erfasst, und dass wenigstens ein Abschirmblech (62a - 62d) am Radarsensor (61) derart angeordnet ist, dass das Blickfeld (B) des Radarsensors (61) durch das Abschirmblech (62a - 62d) eingeschränkt wird.

## Beschreibung

Die Erfindung betrifft eine Winterdienststreumaschine und ein Verfahren zum Ausbringen von Streugut auf einer Fahrbahn mit den Merkmalen des Oberbegriffs von Anspruch 1 bzw. 10.

Derartige Winterdienststreumaschinen sind beispielsweise an einem Streufahrzeug angeordnet und weisen einen Vorratsbehälter für einen Streugutvorrat auf, aus dem das Streugut mit einer Dosiervorrichtung auf eine Streuscheibe dosiert und davon in einem Streufächer auf die Fahrbahn verteilt wird. Da die Winterdienststreumaschine üblicherweise am Heck des Streufahrzeugs angeordnet ist, so dass das Streugut entgegen der Fahrtrichtung nach hinten weg verteilt wird, ist der Streufächer für den Fahrer kaum oder gar nicht direkt sichtbar.

Deshalb wird üblicherweise an der Winterdienststreumaschine eine Detektionsvorrichtung eingesetzt, mit der der Streufächer überwacht werden kann. Im normalen Betrieb erkennt die Detektionsvorrichtung, dass der Streufächer vorhanden ist und meldet dies über ein positives Signal an den Fahrer. Ist jedoch der Streufächer durch eine Störung nur teilweise oder gar nicht vorhanden, beispielsweise falls die Dosiervorrichtung durch Streugut verstopft, wird die Störung durch die Detektionsvorrichtung erkannt und über ein entsprechendes Signal an den Fahrer gemeldet. Dadurch wird verhindert, dass der Fahrer einen längeren Bereich der Fahrbahn abfährt, ohne dabei Streugut zu verteilen.

Die DE1534355 offenbart ein Anzeigegerät für die Streukontrolle an Streumaschinen für den Winterdienst, wobei das Streugut an einen in den Streufächer hineinragenden Fühler prallt, der beispielsweise aus einem Blechstreifen besteht. Die durch den Anprall entstehenden akustischen Schwingungen werden durch ein Mikrofon aufgenommen und in einer elektronischen Auswertezelle in Lichtimpulse umgesetzt, die dann auf eine im Fahrerhaus angebrachte Kontroll-Lampe übertragen werden.

Nachteilig dabei ist, dass der Fühler durch das Anprallen des Streuguts verschleißt bzw. auch korrodiert und es zu einer Fehlfunktion kommen kann. Darüber hinaus muss der Fühler zur Gewährleistung einer korrekten Funktion regelmäßig gewartet werden.

Aufgabe der vorliegenden Erfindung ist es daher eine Winterdienststreumaschine zum Ausbringen von Streugut auf einer Fahrbahn bereitzustellen, bei der die Detektionsvorrichtung zuverlässiger ist und einen geringeren Wartungsaufwand erfordert.

Zur Lösung dieser Aufgabenstellung stellt die Erfindung eine Winterdienststreumaschine mit den Merkmalen des Anspruchs 1 bereit. Vorteilhafte Ausführungsformen sind in den Unteransprüchen genannt.

Dadurch, dass die Detektionsvorrichtung zur Erfassung des Streufächers einen Radarsensor umfasst, erfolgt die Überwachung des Streufächers berührungslos. Folglich kommt es an der Detektionsvorrichtung weder zu einem Verschleiß noch zu Korrosion durch aufprallendes Streugut. Allerdings haben die Partikel im Streufächer bei einer Winderdienststreumaschine gegenüber dem Radarsensor eine ähnliche Geschwindigkeit wie die Fahrbahn selbst und wären daher im Radarecho nur schwer von den Nutzsignalen des Streufächers zu trennen. Um die Zuverlässigkeit der Detektionsvorrichtung weiter zu erhöhen, ist daher der Radarsensor mit seinem Blickfeld nach oben gerichtet angeordnet, so dass er den Streufächer von unten her erfasst. Folglich gelangt kein Radarecho von der Fahrbahn zum Radarsensor zurück und die Zuverlässigkeit wird so noch weiter erhöht. Darüber hinaus werden mit dem Abschirmblech trotz der Orientierung des Sensors verbleibende Fahrbahnbereich sowie seitliche Objekte aus dem Blickfeld des Radarsensors ausgeblockt, wodurch weitere Störsignale vermieden werden. Folglich arbeitet die Detektionsvorrichtung besonders zuverlässig und erfordert einen nur geringen oder gar keinen Wartungsaufwand.

Die Winterdienststreumaschine kann an einem Streufahrzeug angeordnet sein, vorzugsweise an dessen Heck. Das Streufahrzeug kann beispielsweise ein Ackerschlepper, Kommunalschlepper oder ein Lastkraftwagen sein. Die Winterdienststreumaschine kann zum Antrieb und/oder Steuerung der Streuscheibe und/oder der Dosiervorrichtung über eine Zapfwelle, eine Gelenkwelle, Hydraulikleitungen und/oder Elektroleitungen mit dem Streufahrzeug verbunden sein. Die Winterdienststreumaschine kann einen Rahmen zur Aufnahme des Vorratsbehälters, der Dosiervorrichtung, der Streubscheibe und/oder der Detektionseinrichtung umfassen, der über Kopplungselement mit dem Streufahrzeug verbunden ist. Das Kopplungselement kann beispielsweise eine 3-Punkt-Verbindung sein. Zudem kann die Winterdienststreumaschine ein eigenes Fahrwerk zum Abstützen auf der Fahrbahn umfassen.

Der Vorratsbehälter kann an seinem vertikal unteren Ende trichterförmig ausgebildet sein. Mit "vertikal" kann hier die Richtung der Schwerkraft und/oder die Richtung auf den Erdmittelpunkt gemeint sein. Zudem kann der Vorratsbehälter einen Aufsatz zur Erweiterung des Streugutvorrats umfassen.

Das Streugut kann Sand, Kies, Salz und/oder ein Salz-Sand-Gemisch umfassen. Dadurch kann Eis und/oder Schnee auf der Fahrbahn zum Schmelzen gebracht oder dessen Rutschfähigkeit vermindert werden.

Die Dosiervorrichtung kann ein Blendenelement mit einer elektrisch, hydraulisch und/oder manuell verstellbaren Öffnung umfassen. Je nach Öffnung gelang so mehr oder weniger Streugut aus dem Vorratsbehälter auf die Streuscheibe.

Die Streuscheibe kann ein drehbar angetriebenes, kreisscheibenförmiges Element mit davon abstehenden Wurfelementen sein. Durch die Drehung der Streuscheibe wird darauf herabfallendes Streugut mit den Wurfelementen als Streufächer auf die Fahrbahn geschleudert. Die Streuscheibe kann mit einem eigenen Elektro- oder Hydraulikmotor oder über die zuvor erwähnte Zapf- bzw. Gelenkwelle drehbar angetrieben sein.

Dass der Radarsensor mit seinem Blickfeld nach oben gerichtet ist, kann hier bedeuten, dass eine Blickfeldachse vom Radarsensor ausgehend wenigstens schräg nach oben gerichtet ist. "Nach oben" kann hier "wenigstens anteilig entgegen der Richtung der Schwerkraft oder vom Erdmittelpunkt weg" bedeuten. Anders ausgedrückt kann die Blickfeldachse im Betrieb von der Fahrbahn weggerichtet sein. Ebenso kann dies bedeuten, dass der Radarsensor vertikal unterhalb der Streuscheibe angeordnet ist und von unten schräg oder senkrecht auf den von der Streuscheibe im Betrieb erzeugten Streufächer gerichtet ist.

Der Radarsensor kann eine oder mehrere Antennen umfassen, mit der die Radarstrahlen abgestrahlt und wieder empfangen werden. Vorzugsweise kann der Radarsensor dazu ausgebildet sein, ein Radarecho vom Streufächer zu empfangen. Die Radarstrahlen können das Blickfeld des Radarsensors bilden und/oder in Richtung nach oben zum Streufächer hin abgestrahlt werden. Der Radarsensor kann dazu ausgebildet sein, Radarstrahlen mit einer Wellenlänge in einem Bereich von 1 mm - 100 mm, vorzugsweise in einem Bereich von 2 mm - 15 mm abzustrahlen und zu empfangen. Dadurch kann der Ort des Streufächers besonders gut ermittelt werden. Der Radarsensor kann mit seinem Blickfeld derart angeordnet sein, dass es den Streufächer vorzugsweise schräg schneidet. Dadurch kann mit den Radarsensor die Partikelgeschwindigkeit im Streufächer erfasst werden, da diese eine Dopplerverschiebung im Radarecho bewirkt.

Das Abschirmelement kann ein oder mehrere Blech- oder Kunststoffelemente umfassen, die einen äußeren Rand des Blickfelds wenigstens teilweise schneiden. Durch das Abschirmelement kann das Blickfeld entsprechend so gestaltet werden, dass möglichst nur der Streufächer vom Radarsensor erfasst wird.

Der Streuscheibe kann genau ein Radarsensor zugeordnet sein. Da lediglich das Vorhandensein des Streufächers erfasst werden muss, kann so die Detektionsvorrichtung besonders einfach aufgebaut werden. Denkbar ist jedoch auch, dass die Detektionsvorrichtung mehrere Radarsensoren umfasst, um eine Streucharakteristik des Streufächers zu erfassen.

Das wenigstens eine Abschirmblech kann derart ausgebildet sein, dass es das Blickfeld des Radarsensors in einem Ring umschließt, so dass ein Rand des Rings das Blickfeld einschränkt. Dadurch kann das Blickfeld zu allen Seiten hin auf die Form des Streufächers angepasst werden, so dass möglichst wenig Störobjekte mit dem Radarsensor erfasst werden.

Das wenigstens eine Abschirmblech kann vier miteinander zu einem Ring verbundene Abschirmbleche umfassen. Dadurch kann der Ring aus Abschirmblechen besonders einfach hergestellt werden. Beispielsweise können vier im Wesentlichen rechteckige Abschirmbleche an jeweils zwei Seiten miteinander verbunden sein und den Radarsensor umschließen. Dadurch bilden die vier Abschirmbleche eine im Wesentlichen rechteckige Öffnung für das Blickfeld des Radarsensors. Denkbar ist auch, dass die vier Abschirmbleche im Bereich der Öffnung gekrümmte Kanten aufweisen. Dadurch können die Abschirmbleche besonders genau an die Form des Streufächers angepasst werden.

Die Detektionseinrichtung kann eine Auswerteeinheit umfassen, um durch den Dopplereffekt verursachte Frequenzänderungen in einem vom Radarsensor empfangenen Radarsignal auszuwerten. Durch die Differenzgeschwindigkeit der Partikel des Streufächers gegenüber dem Radarsensor wird nach dem Dopplereffekt die Frequenz des Radarechos verändert. Da die Differenzgeschwindigkeit a priori bekannt ist, kann über die dementsprechende Frequenzänderung im Radarecho bestimmt werden, ob das Radarsignal von den Partikeln des Streufächers stammt oder von anderen Objekten.

Die Auswerteeinheit kann einen auf die Partikelgeschwindigkeit abgestimmten Frequenzfilter für das Radarsignal umfassen. Beispielsweise kann der Frequenzfilter einen Bandpass mit einer auf eine Soll-Partikelgeschwindigkeit abgestimmten Mittenfrequenz und mit einer Halbwertsbreite in einem Bereich von 100 - 10000 Hz, vorzugsweise in einem Bereich von 100 - 5000 Hz um die Mittenfrequenz umfassen. Dadurch können die von den Partikeln des Streufächers zurückgestreuten Radarsignale besonders einfach ausgewertet werden.

Eine Blickfeldachse des Radarsensors kann mit dem Streufächer einen Winkel in einem Bereich von 5° - 85°, vorzugsweise in einem Bereich von 20° - 70° einschließen. Da die Blickfeldachse des Radarsensors schräg auf den Streufächer ausgerichtet ist, kann dadurch eine Geschwindigkeitskomponente der Partikel im Streufächer erfasst werden. Die Blickfeldachse kann eine Mittel- oder Zentralachse des Blickfelds sein. Ebenso kann dies eine Achse senkrecht zu einer Austrittsfläche für die Radarstrahlen am Radarsensor sein.

Darüber hinaus stellt die Erfindung zur Lösung der Aufgabenstellung ein Verfahren mit den Merkmalen des Anspruchs 10 bereit. Das Verfahren kann mit der Winterstreumaschine nach einem der Ansprüche 1 - 9 und/oder nach den zuvor beschriebenen Merkmalen einzeln oder in beliebigen Kombinationen durchgeführt werden. Ferner kann das Verfahren die zuvor beschriebenen Merkmale einzeln oder in beliebigen Kombinationen sinngemäß umfassen.

Dadurch, dass die Detektionsvorrichtung den Streufächer mit einem Radarsensor erfasst, erfolgt die Überwachung des Streufächers berührungslos. Folglich kommt es an der Detektionsvorrichtung weder zu einem Verschleiß noch zu Korrosion durch anprallendes Streugut. Um die Zuverlässigkeit der Detektionsvorrichtung weiter zu erhöhen, ist der Radarsensor mit seinem Blickfeld nach oben gerichtet, so dass er den Streufächer von unten her erfasst. Dadurch gelangt kein Radarecho von der Fahrbahn in den Radarsensor, was andernfalls das Nutzsignal vom Streufächer ungewünscht überlagern könnte. Da die Partikel im Streufächer und die Fahrbahn gegenüber dem Radarsensor eine ähnliche Geschwindigkeit haben, wären die Nutzsignale der Partikel sonst nur unzuverlässig von den Störsignalen der Fahrbahn im Radarecho zu trennen. Darüber hinaus werden mit dem Abschirmblech die Fahrbahn sowie seitliche Objekte zusätzlich aus dem Blickfeld des Radarsensors ausgeblockt, wodurch weitere Störsignale vermieden werden. Folglich arbeitet das Verfahren besonders zuverlässig und erfordert einen nur geringen oder keinen Wartungsaufwand.

Weiter Merkmale und Vorteile der Erfindung werden anhand der nachfolgenden Ausführungsbeispiele näher erläutert. Dabei zeigt:
- Figur 1: Ein Ausführungsbeispiel einer erfindungsgemäßen Winterdienststreumaschine in einer perspektivischen Ansicht; und
- Figur 2: Eine seitliche Detailansicht der Winterdienststreumaschine aus der Figur 1.

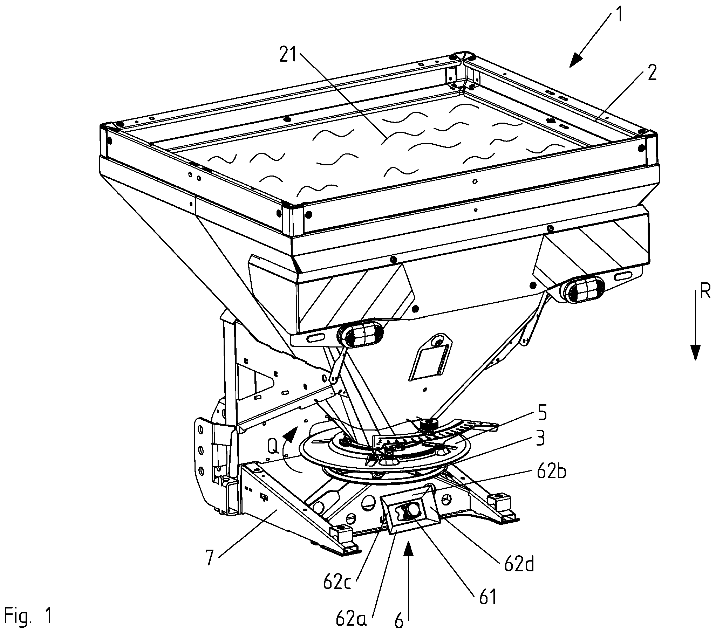

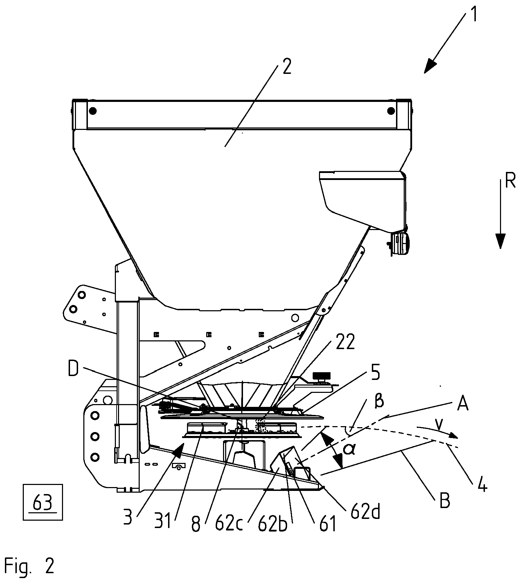

In den Figuren 1 und 2 ist ein Ausführungsbeispiel einer erfindungsgemäßen Winterdienststreumaschine 1 in einer perspektivischen Ansicht bzw. in einer seitlichen Detailansicht dargestellt.

Zu sehen ist der Vorratsbehälter 2 für einen Streugutvorrat 21, der trichterförmig in der vertikalen Richtung R nach unten hin zusammenläuft, so dass das Streugut 22 aus dem Vorrat zur Dosiervorrichtung 5 gelangt. Diese umfasst eine Blende mit einer einstellbaren Öffnung, über die das in der Figur 2 genauer dargestellte Streugut 22 auf die Streuscheibe 3 dosiert wird. Die Streuscheibe 3 dreht sich in der Richtung Q um die vertikale Achse D und umfasst mehrere Flügelelemente 31, durch die das von der Dosiervorrichtung 5 herabfallende Streugut 22 aufgrund der auftretende Fliehkräfte nach außen gedrängt und als Streufächer 4 auf der hier nicht genauer dargestellten Fahrbahn ausgebracht wird.

Weiter ist zu sehen, dass die Streuscheibe 3 von einem Antrieb 8 angetrieben wird, beispielsweise ein Elektro- oder Hydraulikmotor. Ebenso ist ein Antrieb durch Kraftübertragung von einer Zapf- oder Gelenkwelle denkbar.

Die gesamte Anordnung wird durch den Rahmen 7 getragen und ist auf einem hier nicht dargestellten Streufahrzeug angeordnet. Zur Kraftübertragung kann die Winterdienststreumaschine 1 mit dem Streufahrzeug beispielsweise über eine Zapfwelle, Gelenkwelle, Elektroleitungen und/oder Hydraulikleitungen verbunden sein.

Ferner ist die Detektionseinrichtung 6 zur Streufächerüberwachung zu sehen, die den mit seinem Blickfeld B nach oben gerichteten Radarsensor 61, die Abschirmbleche 62a - 62d und die Auswerteeinheit 63 umfasst. Wie in der Figur 2 genauer zu sehen, erfasst der Radarsensor 61 den Streufächer 4 von unten her, also wenigstens anteilig entgegen der vertikalen Richtung R. Anders ausgedrückt schließt die Blickfeldachse A mit dem Streufächer 4 einen Winkel β in einem Bereich von 5 ° bis 85° ein, hier beispielsweise 30°. Dadurch verläuft wenigstens eine Komponente der Partikelgeschwindigkeit v parallel zur Blickfeldachse A, so dass der Streufächer 4 über den Dopplereffekt besonders einfach vom Radarsensor 61 erfasst werden dann. Darüber hinaus wird durch das nach oben gerichtete Blickfeld B nicht die Fahrbahn erfasst, so dass es zu keinem unerwünschten Radarecho kommen kann.

Darüber hinaus sind die Abschirmbleche 62a - 62d zu einem Ring verbunden um den Radarsensor 61 angeordnet. Die Abschirmbleche 62a - 62d sind jeweils im Wesentlichen quadratisch und an jeweils zwei Rändern mit den entsprechend benachbarten Blechen verbunden. Dadurch wird das Blickfeld B des Radarsensors 61 in vertikaler Richtung auf den Winkel α um die Blickfeldachse A herum eingeschränkt, hier beispielsweise auf 20°. Dadurch werden weniger Objekte vom Radarsensor 61 erfasst, die andernfalls zu einem unerwünschten Radarecho führen könnten. Demgegenüber wird der Streufächer 4 besonders störungsfrei erfasst.

Der Radarsensor 61 sendet und empfängt Radarstrahlen mit einer Wellenlänge im Bereich von 2 mm - 15 mm, hier beispielsweise 10 mm. Die empfangenen Radarsignale werden mit der Auswerteeinheit 63 ausgewertet. Aufgrund der empfangenen Signale wird mit der Auswerteeinheit 63 bestimmt, ob der Streufächer 4 im Betrieb tatsächlich vorhanden oder unterbrochen ist, beispielsweise aufgrund von einer Verstopfung der Dosiervorrichtung 5.

Dazu wertet die Auswerteeinheit 63 die empfangenen Radarsignale aus, um die aufgrund der Partikelgeschwindigkeit v durch den Dopplereffekt verursachten Frequenzänderungen zu bestimmen. Dadurch können die empfangenen Radarsignale aufgrund ihrer Frequenz dem Streufächer 4 zugeordnet werden. Andere Objekte haben demgegenüber andere Frequenzen, da sie gegenüber dem Radarsensor 61 eine andere Geschwindigkeit aufweisen.

Für eine besonders effiziente Auswertung wird zunächst im empfangenen Radarsignal das Nutzsignal vom Trägersignal durch Demodulation getrennt. Anschließend umfasst die Auswerteeinheit 63 einen Bandpass-Frequenzfilter mit einer auf die Soll-Partikelgeschwindigkeit v angepassten Mittenfrequenz und einer Halbwertsbreite in einem Bereich von 100 Hz - 10000 Hz. Dadurch werden die Nutzsignale der Partikel im Streufächer 4 besonders einfach und genau erfasst.

Des Weiteren kann das empfangene Radarsignal in Bezug auf die Laufzeit der Radarstrahlen vom Radarsensor 61 zum Streufächer 4 hin und zurück ausgewertet werden, um das Radarecho aus der bekannten Entfernung vom Radarsensor 61 zum Streufächer 4 herauszufiltern.

Zudem kann das empfangene Radarsignal auch aufgrund der Intensität ausgewertet werden, ob der Streufächer 4 tatsächlich vorhanden ist.

Folglich kann mit dem Radarsensor 61 und der Auswerteeinheit 63 gemessen werden, ob der Streufächer im Betrieb tatsächlich vorhanden ist oder nicht.

Die Dektektionseinrichtung 6 liefert dann an eine Steuerung und/oder an eine Kontrollleuchte im Fahrerhaus ein Signal, ob der Streufächer 4 vorhanden ist oder eine Störung vorliegt.

Die Winterdienststreumaschine 1 aus den Figuren 1 und 2 wird wie folgt eingesetzt:
Der Streugut 22 im Vorratsbehälter 2 wird mit der Dosiervorrichtung 5 auf die Streuscheibe 3 dosiert und davon als Streufächer 4 auf der Fahrbahn verteilt. Dabei wird der Streufächer 4 mit der Detektionseinrichtung 6 überwacht, indem er mit dem Radarsensor 61 erfasst wird. Dazu ist das Blickfeld B des Radarsensors 61 nach oben gerichtet, so dass der Streufächer 4 von unten her erfasst wird. Zudem ist das Blickfeld B des Radarsensors 61 mit den Abschirmblechen 62a - 62d eingeschränkt, um möglichst wenig Radarecho von Störobjekten zu erfassen. Die empfangenen Radarsignale werden mit der Auswerteeinheit 63 ausgewertet und darüber bestimmt, ob der Streufächer 4 tatsächlich vorhanden ist oder nicht.

Dadurch, dass die Detektionseinrichtung 6 berührungsfrei arbeitet, entsteht daran auch kein Verschleiß oder eine Korrosion durch das Streugut 22. Ferner erfasst das Blickfeld B durch die nach oben gerichtete Ausrichtung des Radarsensors 61 sowie durch die Einschränkung des Blickfelds B mit den Abschirmblechen 62a - 62d fast ausschließlich den Streufächer 4. Folglich arbeitet die Detektionsvorrichtung 6 ohne hohen Wartungsaufwand besonders zuverlässig.

Es versteht sich, dass in den zuvor beschriebenen Ausführungsbeispielen genannte Merkmale nicht auf diese speziellen Kombinationen beschränkt sind und in beliebigen anderen Kombinationen möglich sind.

## Patentansprüche

1. Winterdienststreumaschine (1) zum Ausbringen von Streugut (22) auf einer Fahrbahn, mit
- einem Vorratsbehälter (2) für einen Streugutvorrat (21),
- einer Streuscheibe (3) zum Verteilen des Streuguts (22) in einem Streufächer (4) auf der Fahrbahn,
- einer Dosiervorrichtung (5) zum Dosieren des Streuguts (22) aus dem Vorrat auf die Streuscheibe (3), und
- mit einer Detektionseinrichtung (6) zur Streufächerüberwachung,
**dadurch gekennzeichnet, dass**
die Detektionseinrichtung (6) einen mit seinem Blickfeld (B) nach oben gerichteten Radarsensor (61) umfasst, der den Streufächer (4) im Betrieb von unten her erfasst, und
dass wenigstens ein Abschirmblech (62a - 62d) am Radarsensor (61) derart angeordnet ist, dass das Blickfeld (B) des Radarsensors (61) durch das Abschirmblech (62a - 62d) eingeschränkt wird.

2. Winterdienststreumaschine (1) nach Anspruch 1, wobei der Streuscheibe (3) genau ein Radarsensor (61) zugeordnet ist.

3. Winterdienststreumaschine (1) nach Anspruch 1 oder 2, wobei das wenigstens eine Abschirmblech (62a - 62d) derart ausgebildet ist, dass es das Blickfeld (B) des Radarsensors (61) in einem Ring umschließt, so dass ein Rand des Rings das Blickfeld (B) einschränkt.

4. Winterdienststreumaschine (1) nach einem der Ansprüche 1 - 3, wobei das wenigstens eine Abschirmbleich (62a - 62d) vier miteinander zu einem Ring verbundene Abschirmbleche (62a - 62d) umfasst.

5. Winterdienststreumaschine (1) nach einem der Ansprüche 1 - 4, wobei die Detektionseinrichtung (6) eine Auswerteeinheit (63) umfasst, um durch den Dopplereffekt verursachte Frequenzänderungen in einem vom Radarsensor (61) empfangenen Radarsignal auszuwerten.

6. Winterdienststreumaschine (1) nach Anspruch 5, wobei die Auswerteeinheit (63) einen auf die Partikelgeschwindigkeit (v) abgestimmten Frequenzfilter für das Radarsignal umfasst.

7. Winterdienststreumaschine (1) nach Anspruch 6, wobei der Frequenzfilter einen Bandpass mit einer auf eine Soll-Partikelgeschwindgkeit abgestimmten Mittenfrequenz und mit einer Halbwertsbreite in einem Bereich von 100 - 10000 Hz, vorzugsweise in einem Bereich von 100 - 5000 Hz um die Mittenfrequenz umfasst.

8. Winterdienststreumaschine (1) nach einem der Ansprüche 1 - 7, wobei eine Blickfeldachse (A) des Radarsensors (61) mit dem Streufächer (4) einen Winkel (β) in einem Bereich von 5° - 85°, vorzugsweise in einem Bereich von 20° - 70° einschließt.

9. Winterdienststreumaschine (1) nach einem der Ansprüche 1 - 8, wobei der Radarsensor (61) dazu ausgebildet ist, Radarstrahlen mit einer Wellenlänge in einem Bereich von 1 mm - 100 mm, vorzugsweise in einem Bereich von 2 mm - 15 mm abzustrahlen und zu empfangen.

10. Verfahren zum Ausbringen von Streugut (22) auf einer Fahrbahn mit einer Winterdienststreumaschine (1), wobei das Streugut (22) aus einem Streugutvorrat (21) in einem Vorratsbehälter (2) mit einer Dosiervorrichtung (5) auf eine Streuscheibe (3) dosiert wird, und wobei das Streugut (22) mit der Streuscheibe (3) in einem Streufächer (4) auf der Fahrbahn verteilt und der Streufächer (4) mit einer Detektionseinrichtung (6) überwacht wird,
**dadurch gekennzeichnet, dass**
die Detektionseinrichtung (6) den Streufächer (4) mit einem Radarsensor (61) von unten her erfasst, wobei ein Blickfeld (B) des Radarsensors (61) nach oben auf den Streufächer (4) gerichtet ist, und
dass das Blickfeld (B) des Radarsensors (61) mit wenigstens einem Abschirmblech (62a - 62d) eingeschränkt wird.
